Europäisches Patentamt

European Patent Office

Office européen des brevets

(11) Publication number: **0 195 140**
**B1**

(12) **EUROPEAN PATENT SPECIFICATION**

(45) Date of publication of patent specification: **08.03.89**

(51) Int. Cl.⁴: **F 16 L 37/08,** F 16 L 19/06

(21) Application number: **85301712.7**

(22) Date of filing: **13.03.85**

(54) Improvements in or relating to tube couplings.

(43) Date of publication of application:
**24.09.86 Bulletin 86/39**

(45) Publication of the grant of the patent:
**08.03.89 Bulletin 89/10**

(84) Designated Contracting States:
**GB**

(56) References cited:
**DE-A-3 123 644**
**FR-A-2 073 350**
**GB-A-1 520 742**
**GB-A-2 011 001**
**LU-A- 39 640**

(73) Proprietor: **Guest, John Derek**
**Horton Bridge Road**
**West Drayton Middlesex UB7 8JR (GB)**

(72) Inventor: **Guest, John Derek**
**Horton Bridge Road**
**West Drayton Middlesex UB7 8JR (GB)**

(74) Representative: **Bayliss, Geoffrey Cyril et al**
**BOULT, WADE & TENNANT 27 Furnival Street**
**London EC4A 1PQ (GB)**

Courier Press, Leamington Spa, England.

## Description

This invention relates to tube couplings and is particularly applicable to tube couplings for joining together a pair of tube ends.

The invention is particularly intended for the adaptation of existing machinery and pipe systems to meet the needs of modified or changing regulations. Specifically, on drink dispensing machinery and the like, there are in existence metal stems and other types of pipings intended for coupling to further components by compression joints which need changing or replacing in order to meet current regulations. This entails either cutting off existing compression fittings or replacing pipe fittings completely.

DE-A-3123644 discloses a tube coupling comprising a body having a throughway extending through the body and open at both ends to receive separate ends of tubes to be coupled together, one end of the body having means for securing a tube, the other end of the body having an annular adaptor to receive a compression joint for securing a tube in the other end of the throughway and a further sealing ring mounted in the throughway adjacent the adaptor to engage and seal with the tube.

GB-A-1520742 discloses a tube coupling comprising a body having a throughway extending through the body and open at one end thereof to receive an end of a tube 40 to be coupled, the end of the body having a bore tapering towards the outer end of the throughway and a collet extending through the taper bore. The collet includes a ring having resilient arms extending axially into the throughway from the ring and engaging the taper bore to be compressed thereby into gripping engagement with the tube inserted at that end of the. throughway and a resilient seal encirled the throughway adjacent the taper bore to engage and seal the tube extending into the throughway through the collet and held thereby.

It is an object of the present invention to render the tube coupling of the type described in GB-A-1520742 to receive a further tube secured in the throughway of the body at the opposite end of the collet by a compression fitting.

This invention provides a tube coupling comprising a body having a throughway extending through the body and open at both ends thereof to receive separate ends of tubes to be coupled together, one end of the body having a bore tapering towards the outer end of the throughway and a collet extending through the tapered bore, the collet including a ring having resilient arms extending axially into the throughway from the ring and engaging the tapered bore to be compressed thereby into gripping engagement with the tube inserted at that end of the throughway and a resilient seal encircling the throughway adjacent the tapered bore to engage and seal with a tube extending into the throughway through the collet and held thereby, wherein the other end of the body has an annular adaptor mounted therein to receive a compression joint for securing a tube in the other end of the throughway and a further sealing ring mounted in the throughway adjacent the adaptor to engage and seal with the further tube; find in that the body of the coupling as formed from plastics and the adaptor is formed from metal, the adaptor being secured to the body by ultrasonic welding.

In one arrangement said annular adaptor may comprise a sleeve and the throughway may be formed with a recess adjacent the end of the sleeve in the throughway in which the resilient seal is mounted to engage the tube extending through the adaptor.

More specifically the recess may be is formed by a counter-bore in the throughway providing a step facing towards said other end of the throughway and opposite the end of the adaptor projecting into the throughway, the sealing ring being disposed between the step and the end of the adaptor.

In any of the above arrangements the compression joint may have an adjustable force applying member to effect the joint when a tube has been inserted in the body. By way of example the compression joint may include an olive which is compressed onto the tube by said force applying member.

Also in any of the above arrangements means may be provided for locking the force applying member in a position in which the tube is held against release from the coupling whilst permitting the tube to rotate with respect to the coupling body.

In particular the adaptor may be internally screw threaded and the adjustable force applying compression member may be a screw threaded bush engaged in the adaptor to actuate the compression joint.

The tube coupling of any of the above arrangements may be in the form of an elbow, Tee or straight connection, bulkhead connector or two or three way divider.

Further in any of the above arrangements the throughway may be formed with a generally centrally disposed annular abutment encircling the throughway and with which tubes inserted into the throughway from opposite ends thereof are engageable to space the ends of the tubes apart.

The following is a description of some specific embodiments of the invention, reference being made to the accompanying drawings in which:

Figure 1 is a diagrammatic view of a tube coupling in accordance with the invention;

Figure 2 is a diagrammatic view of a first modification.

Figure 3 is a diagrammatic view of a second modification; and

Figures 4 shows a further modification.

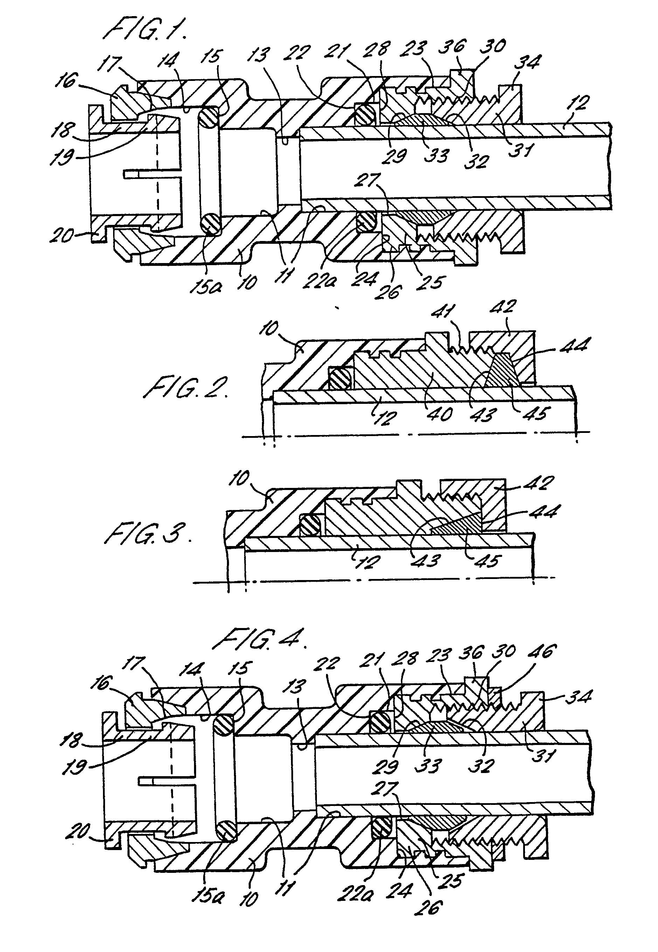

Referring firstly to Figure 1 of the drawings, there is shown a tube coupling comprising a plastics housing or body 10 having a central throughway 11 open at both ends for receiving a length of tube one of which is indicated at 12 from opposite ends of the body to be coupled together.

The throughway 11 is formed with a central annular abutment 13 against which the ends of the tube 12 engage to be spaced apart from one another. The form of coupling provided for the left hand end of the body 10 will now be described. The throughway 11 is counter-bored at 14 providing a step 15 facing towards said one end of the throughway and against which resilient O-ring seal 15a lies to seal with the outer surface of the tube to be inserted in the throughway. At the end of the counterbore 14 adjacent the end of the body 10 an insert sleeve 16 is secured in the body, for example, by sonic welding. The insert sleeve 16 has a tapered bore 17 reducing towards the outer end of the body and a collet 18 is mounted in the sleeve 16 and is provided with axially extending resilient arms 19 extending into the throughway and engageable with the tapered bore 17 to be compressed thereby into gripping engagement with a tube extending through the collet the outer end of the collet projects beyond the sleeve 16 and is formed with an out-turned flange 20 to enable the collet to be pressed inwardly to release the gripping engagement with the tube for release of the tube from the body. A more detailed description of the form of the coupling described above is to be found in GB-A-1520742, GB-A-1573757, GB-A-2007322, GB-A-2051280 and GB-A-2052662.

To the right-hand side of the body 10 the throughway 11 gives way to a counter-bore 21 which provides a step 22 with the throughway 11 facing towards the outer open end of the body. The counter-bore 21 gives way in turn to a further counter-bore 23 thereby forming a further step 24 facing outwardly towards the outer end of the body. A metal adaptor bush 25 is mounted in the counter-bore 23 and having a head 26 at its inner end with an inner bore 27 through which the tube 12 passes and a side face 28 disposed opposite the counter-bore 22. A resilient sealing ring such as ring seal 22a is disposed in the counter-bore 21 between the side face 28 of the bush and the opposing step 22 to seal with the outer surface of the tube 12. The other side of the head 26 is formed with a tapered bore 29 which gives way to a screw threaded counter-bore 30 in the bush. The screw threaded counter-bore receives an externally screw threaded sleeve 31 having an oppositely tapered inner bore 32 at the end extending into the counter bore 30 and an olive 33 is compressed between the inclined bores 29 and 32 by screwing the sleeve 31 into the bush to be compressed into engagement with the outer surface of the tube 12 to lock the tube in the coupling. The outer end of the sleeve 31 is formed with an out-turned flange 34 for manual engagement of the sleeve for turning the sleeve.

The outer surface of the adaptor bush is formed with spaced grooves and is secured in place in the end of the plastics body 10 by ultra-sonic welding. The bush 23 has an out-turned flange 36 at the end of the throughway which abuts against the end of the body.

It will be understood that the coupling can be made to any shape or size required such as an elbow, T-joint, straight connector as shown, bulkhead connector or two- or three-way divider as required. The coupling adapts existing compression fitting designs by isolating the fitting from fluid by the O-ring seal in the plastics housing preventing contamination of the fluid conducted through the coupling by the materials of the compression fitting. The arrangement is particularly advantageous for existing compression fitting pipe installations where changes in specification or regulations forbid conducted fluid contact with the materials of the compression fitting.

Figure 2 shows a modified construction in which the adaptor bush 23 has an extension sleeve projecting outwardly from the body 10 beyond the flange 36 as indicated at 40. The extension sleeve has an external screw thread 41 on to which a female 42 is screwed. The end of the extension sleeve 40 has a conical counter-bore 43 and the opposing face 44 of the nut 42 has a similar conical counter-bore to engage between them an outwardly tapering olive 45 to be compressed on to the tube 12 passing through the coupling by screwing the nut on to the extension sleeve. Figure 3 of the drawings shows a further modification in which the conical counter-bore 43 in the extension sleeve is more deeply drawn and the nut 42 is formed with a radially extending face 44 to engage the olive 45.

Figure 4 of the drawings shows a modification of the arrangement of Figure 1 in which a locking ring 46 is provided on the externally screw threaded sleeve 31 to engage with the end flange 36 on the bush 23 and lock the sleeve 31 in a position of adjustment with respect to the bush. Thus, as illustrated in Figure 4, the bush can be locked in a position spaced slightly away from the olive 33 so that the tube 12 is held in the coupling body but permitted to rotate or swivel in the body to enable, for example, the other end of the tube to be aligned with a further component.

**Claims**

1. A tube coupling comprising a body (10) having a throughway (11) extending through the body and open at both ends thereof to receive separate ends of tubes (12) to be coupled together, one end of the body having a bore (17) tapering towards the outer end of the throughway and a collet (18) extending through the tapered bore, the collet including a ring having resilient arms (19) extending axially into the throughway from the ring and engaging the tapered bore to be compressed thereby into gripping engagement with the tube inserted at that end of the throughway and a resilient seal (15a) encircling the throughway adjacent the tapered bore to engage and seal with a tube extending into the throughway through the collet and held thereby, characterised in that the other end of the body has an annular adaptor (25) mounted therein to receive a compression joint (31, 33) for securing a tube (12) in the other end of the throughway and a further sealing ring (22a) mounted in the throughway adjacent the adaptor to engage and seal with the further tube; and in that the body (10) of the coupling is formed from plastics and the adaptor is formed from metal, the adaptor (25) being secured to the body by ultrasonic welding.

2. A tube coupling as claimed in claim 1, characterised in that said annular adaptor (25) comprises a sleeve and the throughway is formed with a recess (21) adjacent the end (28) of the sleeve in the throughway (11) in which the resilient seal is mounted to engage the tube extending through the adaptor.

3. A tube coupling as claimed in claim 2, characterised in that the recess is formed by a counter-bore (21) in the throughway providing a step (22) facing towards said other end of the throughway (11) and opposite the end (28) of the adaptor (25) projecting into the throughway, the sealing ring being disposed between the step (22) and the end (28) of the adaptor (25).

4. A tube coupling as claimed in any of Claims 1 to 3, characterised in that the compression joint has an adjustable force applying member (31) to effect the joint when a tube has been inserted in the body.

5. A tube coupling as claimed in claim 4, characterised in that the compression joint includes an olive (33) which is compressed onto the tube by said force applying member (31).

6. A tube coupling as claimed in any of Claims 1 to 5, characterised in that means (46) are provided for locking the force applying member (31) in a position in which the tube (12) is held against release from the coupling whilst permitting the tube (12) to rotate with respect to the coupling body (10).

7. A tube coupling as claimed in claim 6, characterised in that the adaptor (25) is internally screw threaded and the adjustable force applying compression member is a screw threaded bush (31) engaged in the adaptor to actuate the compression joint.

8. A tube coupling as claimed in any of the preceding claims in the form of an elbow, Tee or straight connection, bulkhead connector or two or three way divider.

9. A tube coupling as claimed in any of the preceding claims, characterised in that the throughway (11) is formed with a generally centrally disposed annular abutment (13) encircling the throughway and with which tubes inserted into the throughway from opposite ends thereof are engageable to space the ends of the tubes apart.

**Patentansprüche**

1. Schlauchkupplung, bestehend aus einem Mittelstück (10) mit einem Durchlaß (11), der sich durch das Mittelstück erstreckt und zu beiden Enden hiervon mündet, um jeweils ein getrenntes Ende von Schläuchen (12) aufzunehmen, die miteinander zu verbinden sind, wobei ein Ende des Mittelstückes eine zum äußeren Ende des Durchlasses konisch zulaufende Bohrung (17) und eine sich durch die konisch zulaufende Bohrung erstreckende Spannhülse (18) aufweist, wobei die Spannhülse einen Ring mit elastischen Armen (19), die vom Ring aus axial in den Durchlaß hineinragen und in die konisch zulaufende Bohrung eingreifen, um von dieser zu einem Klemmgriff mit dem in dieses Ende des Durchlasses eingeführten Schlauch zusammengedrückt zu werden, und eine elastische Dichtung (15a) enthält, die den Durchlaß neben der konisch zulaufenden Bohrung umfaßt, um mit einem Schlauch schlüssig ineinanderzugreifen, der durch die Spannhülse in den Durchlaß hineinragt und von dieser festgehalten wird, dadurch gekennzeichnet, daß das äußere Ende des Mittelstückes über ein darin befestigtes ringförmiges Paßstück (25), um eine Klemmdichtung (31, 33) zur Sicherung eines Schlauches (12) am anderen Ende des Durchlasses aufzunehmen, und über einen weiteren Dichtungsring (22a) verfügt, der im Durchlaß neben dem Paßstück befestigt ist, um mit dem anderen Schlauch schlüssig ineinanderzugreifen, und daß das Mittelstück (10) der Kupplung aus Kunststoffen und das Paßstück aus Metall gefertigt ist, wobei das Paßstück (25) durch Ultraschallschweißung am Mittelstück befestigt ist.

2. Schlauchkupplung gemäß dem Patentanspruch 1, gekennzeichnet dadurch, daß das erwähnte ringförmige Paßstück (25) eine Muffe enthält und der Durchlaß mit einer Aussparung (21) neben dem Ende (28) der Muffe im Durchlaß (11) geformt ist, in die die elastische Dichtung befestigt wird, um schlüssig am Schlauch anzuliegen, der durch das Paßstück hindurchragt.

3. Schlauchkupplung gemäß dem Patentanspruch 2, gekennzeichnet dadurch, daß die Aussparung durch eine Senkung (21) im Durchlaß gebildet wird, die einen Absatz (22) ergibt, der zu dem erwähnten anderen Ende des Durchlasses (11) gerichtet ist und gegenüber dem Ende (28) des Paßstückes (25) in den Durchlaß hineinragt, wobei der Dichtungsring zwischen dem Absatz (22) und dem Ende (28) des Paßstückes (25) angeordnet ist.

4. Schlauchkupplung gemäß einem der Patentansprüche 1 bis 3, gekennzeichnet dadurch, daß die Klemmdichtung über ein verstellbares Anpreßglied (31) verfügt, das die Dichtung herstellt, wenn ein Schlauch in das Mittelstück eingeführt worden ist.

5. Schlauchkupplung gemäß dem Patentanspruch 4, gekennzeichnet dadurch, daß die Klemmdichtung einen Schneidring (33) enthält, der durch das erwähnte Anpreßglied (31) auf den Schlauch gepreßt wird.

6. Schlauchkupplung gemäß einem der patentansprüche 1 bis 5, gekennzeichnet dadurch, daß eine Vorrichtung (46) vorgesehen ist, um das Anpreßglied (31) in einer Stellung festzuklemmen, in welcher der Schlauch (12) daran gehindert wird, sich aus der Kupplung zu lösen, während der Schlauch (12) sich in Bezug auf das Kupplungs-Mittelstück (10) frei drehen kann.

7. Schlauchkupplung gemäß dem Patentanspruch 6, gekennzeichnet dadurch, daß das Paßstück (25) mit einem Innenschraubgewinde versehen ist und das verstellbare Anpreßglied eine Gewindehülse (31) darstellt, die in das Paßstück eingreift, um auf die Klemmdichtung einzuwirken.

8. Schlauchkupplung gemäß einem der vorstehenden Patentansprüche, in Form einer Krümmer-, T- oder geraden Verbindung, eines Schutzwandanschlusses oder eines Zwei- oder Dreiwegeverteilers.

9. Schlauchkupplung gemäß einem der vorstehenden Patentansprüche, gekennzeichnet dadurch, daß der Durchlaß (11) mit einem im großen und ganzen mittig angeordneten ringförmigen Widerlager (13) gebildet ist, das den Durchlaß umringt und mit dem die in den Durchlaß von dessen jeweils gegenüberliegenden Enden eingeführten Schläuche schlüssig ineinandergreifen können, sodaß die Enden der Schläuche abgespreizt werden.

**Revendications**

1. Raccord de tuyau comprenant un corps (10) traversé intégralement par un passage (11) ouvert à ses deux extrémités pour recevoir des bouts séparés de tuyaux (12) devant être raccordés ensemble, une extrémité du corps ayant un alésage (17) diminuant vers l'extrémité extérieure du passage et une douille (18) s'étendant par l'alésage conique, la douille comprenant une bague ayant des bras élastiques (19) s'étendant axialement dans le passage en partant de la bague et s'insérant dans l'alésage conique pour être comprimé par lui en prise de serrage avec le tuyau inséré à l'extrémité du passage, et un joint élastique (15a) encerclant le passage dans le voisinage de l'alésage conique pour s'insérer hermétiquement dans un tuyau s'étendant dans le passage par la douille et maintenu par ce dispositif, caractérisé en ce que l'autre extrémité du corps est dotée d'un adaptateur (25) annulaire qui y est monté pour recevoir un joint de compression (31, 33) pour la fixation d'un tuyau (12) dans l'autre extrémité du passage, et un autre anneau d'étanchéité (22a) monté dans le passage dans le voisinage de l'adaptateur pour s'engager hermétiquement dans le tuyau suivant, et en ce que le corps (10) du raccord est fabriqué en un matériau plastique, et que l'adaptateur est fabriqué en métal, l'adaptateur (25) étant fixé au corps par soudage par ultrasons.

2. Raccord de tuyau selon la revendication 1, caractérisé en ce que ledit adaptateur annulaire (25) comprend un manchon, et en ce que le passage est constitué par un évidement (21) avoisinant l'extrémité (26) du manchon dans le passage (11) dans lequel le joint élastique est monté pour s'insérer dans le tuyau s'étendant au travers de l'adaptateur.

3. Raccord de tuyau selon la revendication 2, caractérisé en ce que l'évidement est constitué par un contre-alésage (21) dans le passage donnant un gradin (22) faisant face à ladite autre extrémité du passage (11) et en face de l'extrémité (28) de l'adaptateur (25) dépassant à l'intérieur du passage, la bague d'étanchéité étant disposée entre le gradin (22) et l'extrémité (28) de l'adaptateur (25).

4. Raccord de tuyau selon l'une quelconque des revendications 1 à 3, caractérisé en ce que le joint de compression a un élément (31) applicateur de force réglable pour effectuer le joint lorsqu'un tuyau a été inséré dans le corps.

5. Raccord de tuyau selon a revendication 4, caractérisé en ce que le joint de compression comprend une bague coupante (33) qui est comprimée sur le tuyau par ledit élément applicateur de force (31).

6. Raccord de tuyau selon l'une quelconque des revendications 1 à 5, caractérisé en ce que des moyens (46) sont prévus pour bloquer l'élément applicateur de force (31) en une position en laquelle le tuyau (12) est maintenu de sorte qu'il ne se dégage pas du raccord tout en permettant au tuyau (12) de tourner par rapport au corps du raccord (10).

7. Raccord de tuyau selon la revendication 6, caractérisé en ce que l'adaptateur (25) est fileté intérieurement et en ce que l'élément de compression applicateur de force réglable est une douille filetée (31) insérée dans l'adaptateur pour actionner le joint de compression.

8. Raccord de tuyau selon toute revendication précédente sous forme de coude, té ou raccord droit, raccord de traversée de cloison, ou raccord diviseur à deux ou trois voies.

9. Raccord de tuyau selon toute revendication précédente, caractérisé en ce que le passage (11) est constitué avec une butée annulaire (13) disposée d'une manière générale centralement, entourant le passage, et dans laquelle des tuyaux insérés dans le passage à partir d'extrémités opposées de ce dernier peuvent s'enfoncer pour séparer les extrémités des tuyaux.

FIG.1.

FIG.2.

FIG.3.

FIG.4.